# EUROPÄISCHE PATENTSCHRIFT

(11) **EP 2 439 132 B1**
(45) Veröffentlichungstag und Bekanntmachung des Hinweises auf die Patenterteilung: **25.06.2014**
(21) Anmeldenummer: 11004645.5
(22) Anmeldetag: 08.06.2011
(51) Int. Cl.: B62J 6/00, B60Q 1/26, B60Q 1/32, B60Q 1/34, B62J 6/02, B62J 6/04

(54) **Beleuchtungseinrichtung für ein Fahrzeug**
Illumination device for a vehicle
Dispositif d'éclairage pour un véhicule

(30) Priorität: 11.10.2010 DE 102010047903
(43) Veröffentlichungstag der Anmeldung: 11.04.2012
(73) Patentinhaber: Motogadget GmbH, 10997 Berlin (DE)
(72) Erfinder: Garrit, Keller, 10999 Berlin (DE)

(56) Entgegenhaltungen:
- EP-A1- 2 101 202
- EP-A1- 2 169 296
- EP-A1- 2 269 901
- EP-A2- 1 684 002
- EP-A2- 2 071 228
- WO-A1-2005/001332
- DE-A1- 10 234 110
- DE-A1-102009 020 719
- US-A1- 2008 259 620

## Beschreibung

Die vorliegende Erfindung betrifft eine Beleuchtungseinrichtung für ein Fahrzeug, insbesondere für ein Zweirad. Die Beleuchtungseinrichtung umfasst:
- mindestens eine Lichtquelle zum Aussenden von Licht und
- einen massiven Lichtleitkörper aus transparentem Material, mit
   - mindestens einer Lichteintrittsfläche zum Einkoppeln zumindest eines Teils des ausgesandten Lichts,
   - mindestens einer Grenzfläche zur Totalreflexion zumindest eines Teils des eingekoppelten Lichts, und
   - mindestens einer Lichtaustrittfläche zum Auskoppeln zumindest eines Teils des totalreflektierten Lichts,
wobei die äußerlich sichtbare Form und die äußeren Abmessungen der Beleuchtungseinrichtung im am Fahrzeug montierten Zustand durch die Form und Abmessungen des Lichtleitkörpers definiert sind.

Eine derartige Beleuchtungseinrichtung ist aus der WO 2005/001332 A1 bekannt.

Aus dem Stand der Technik sind ferner eine Vielzahl unterschiedlicher Beleuchtungseinrichtungen bekannt, die einen massiven Lichtleitkörper aus transparentem Material aufweisen, in den Licht eingekoppelt, durch Totalreflexion umgelenkt und wieder ausgekoppelt wird. Dabei macht man sich in der Regel die Tatsache zu Nutze, dass Licht nur an einigen wenigen flächenmäßig beschränkte Lichteinkoppelflächen, vorzugsweise über lediglich eine Einkoppelfläche, in den Lichtleitkörper eingekoppelt und über eine Vielzahl von Auskoppelelementen durch eine oder mehrere großflächige Lichtauskoppelflächen ausgekoppelt werden kann. Auf diese Weise kann mittels des Lichtleitkörpers aus einer Lichtquelle oder einigen wenigen Lichtquellen eine relativ große, weitgehend homogen ausgeleuchtete Lichtaustrittsfläche erzeugt werden. Aufgrund der totalreflektierenden Eigenschaften des Lichtleitkörpers können die Lichtquellen, deren Licht in den Lichtleitkörper eingekoppelt wird, völlig unabhängig von der Lichtaustrittsfläche angeordnet werden, durch die das Licht aus dem Lichtleitkörper ausgekoppelt wird. Das Licht wird mittels der Totalreflexion in dem Lichtleitkörper von der Lichteintrittsfläche bis zu Lichtaustrittsflächen weitergeleitet. Diese Unabhängigkeit der Position der Lichtquellen von der Position der Lichtaustrittsflächen ergibt eine große Flexibilität beim Entwurf und dem Design der Beleuchtungseinrichtung. Eine derartige Beleuchtungseinrichtung ist bspw. aus der EP 2 071 228 A2 bekannt.

Die aus dem Stand der Technik bekannten Beleuchtungseinrichtungen mit Lichtleitkörper umfassen stets ein Gehäuse, in dem der Lichtleitkörper angeordnet ist. Das Gehäuse weist eine Lichtaustrittsöffnung auf, durch die das über die Lichtaustrittsfläche des Lichtleitkörpers ausgekoppelte Licht zur Erzeugung einer gewünschten Lichtverteilung der Beleuchtungseinrichtung hindurchtritt. Um das Eindringen von Feuchtigkeit und Schmutz in das Gehäuse zu verhindern, ist die Lichtaustrittsöffnung des Gehäuses mittels einer lichtdurchlässigen Abdeckscheibe verschlossen. Die Abdeckscheibe kann zur Streuung des hindurchtretenden Lichts in horizontaler und/oder vertikaler Richtung zumindest bereichsweise mit optisch wirksamen Profilen, beispielsweise mit Prismen oder Zylinderlinsen, versehen sein (so genannte Streuscheibe). Alternativ kann die Abdeckscheibe auch ohne optisch wirksame Profile ausgebildet sein (so genannte klare Scheibe).

Entscheidend bei den aus dem Stand der Technik bekannten Beleuchtungseinrichtungen mit Lichtleitkörper ist jedoch, dass die äußere Form und Abmessungen der Beleuchtungseinrichtung im eingebauten Zustand stets durch die Form und Abmessungen des Gehäuses und der Abdeckscheibe definiert sind. Die Form und Abmessungen des Lichtleitkörpers sind als ein Bestandteil der Beleuchtungseinrichtung in dem Gehäuse angeordnet und haben keinen Einfluss auf die Form und Abmessungen der Beleuchtungseinrichtung. Üblicherweise sind die Lichtleitkörper der bekannten Beleuchtungseinrichtungen in dem Gehäuse eines Fahrzeugscheinwerfers integriert, in dem außer dem Lichtleitkörper auch noch Lichtmodule zur Realisierung einer beliebigen Scheinwerferfunktion und/oder andere Leuchtenmodule zur Realisierung einer beliebigen Leuchtenfunktion angeordnet sind.

Die bekannten Beleuchtungseinrichtungen sind aufgrund des relativ voluminösen Gehäuses für den Einsatz in einem Zweirad, beispielsweise einem Fahrrad, einem sogenannten E-Bike (Electronic Bike, einem elektrisch betriebenen Zweirad), einem Mofa oder einem Motorrad, nicht gut geeignet. Ferner ist das konventionelle Design der bekannten Beleuchtungseinrichtungen insbesondere im Bereich des Fahrzeugtunings und der Sonderanfertigung von Fahrzeugen (sog. Custom-Made Fahrzeuge) aufgrund ihres konventionellen Erscheinungsbildes wenig beliebt. Aber auch in herkömmlichen vier- oder mehrrädrigen Kraftfahrzeugen können die bekannten Beleuchtungseinrichtungen zu Platzproblemen und Einschränkungen bei der Designfreiheit führen.

Ausgehend von dem beschriebenen Stand der Technik liegt der vorliegenden Erfindung deshalb die Aufgabe zugrunde, eine möglichst kleinbauende und kompakte Beleuchtungseinrichtung zu realisieren, die zudem ein neuartiges äußeres Erscheinungsbild aufweist.

Zur Lösung dieser Aufgabe wird ausgehend von der Beleuchtungseinrichtung der eingangs genannten Art vorgeschlagen, dass die Beleuchtungseinrichtung mindestens zwei Lichtquellen und der Lichtleitkörper zwei im Wesentlichen gegenüberliegende Lichtaustrittsflächen aufweist, wobei von den Lichtquellen ausgesandtes Licht nach einer Einkopplung durch Lichteintrittsflächen und einer Totalreflexion an Grenzflächen die Beleuchtungseinrichtung durch die Lichtaustrittsflächen in zwei im Wesentlichen gegenüberliegenden Hauptabstrahlrichtungen verlässt.

Gemäß der vorliegenden Erfindung wird also vorgeschlagen, auf ein Gehäuse für die Beleuchtungseinrichtung zu verzichten. Stattdessen bildet der Lichtleitkörper den wesentlichen Teil der bei am Fahrzeug montierter Beleuchtungseinrichtung sichtbaren Form und definiert die äußeren Abmessungen des sichtbaren Teils der eingebauten Beleuchtungseinrichtung. Dabei wird das Gehäuse gewissermaßen durch den Lichtleitkörper gebildet. Aufgrund des Verzichts auf das Gehäuse, kann auch auf eine Abdeckscheibe verzichtet werden, durch die das aus dem Lichtleitkörper ausgekoppelte Licht zur Erzeugung der gewünschten Lichtverteilung der Beleuchtungseinrichtung bei den aus dem Stand der Technik bekannten Beleuchtungseinrichtungen hindurchtreten muss. Da das Hindurchtreten von Licht durch eine optisch transparente Abdeckscheibe stets mit Verlusten behaftet ist, selbst wenn die Abdeckscheibe als eine klare Scheibe ohne optisch wirksame Profile ausgebildet ist, hat die erfindungsgemäße Beleuchtungseinrichtung auch einen verbesserten Wirkungsgrad. Schließlich ergeben sich dadurch, dass der sichtbare Teil der Beleuchtungseinrichtung zum überwiegenden Teil durch die Form und Abmessungen des Lichtleitkörpers gebildet wird, völlig neue Möglichkeiten und Aspekte hinsichtlich des Designs der Beleuchtungseinrichtung. Das äußere Erscheinungsbild der eingebauten Beleuchtungseinrichtung und die Wirkung auf den Betrachter wird durch die Form und die äußeren Abmessungen des im montierten Zustand der Beleuchtungseinrichtung von außen sichtbaren Teils des Lichtleitkörpers bestimmt.

Der Lichtleitkörper kann im Rahmen der gesetzlichen Anforderungen und Bestimmungen an die Beleuchtungseinrichtung und die durch diese erzeugte Lichtverteilung eine nahezu beliebige Form aufweisen. Insbesondere ist es denkbar, dass die äußere Form und Abmessungen des Lichtleitkörpers an die Form und Abmessungen der den Lichtleitkörper im montierten Zustand der Beleuchtungseinrichtung umgebenden Fahrzeugteile angepasst wird, sodass beispielsweise ein kontinuierlicher Übergang zwischen den die montierte Beleuchtungseinrichtung umgebenden Fahrzeugteilen und einer Mantelfläche des Lichtleitkörpers gegeben ist. Im ausgeschalteten Zustand der Beleuchtungseinrichtung ergibt sich ein besonders unauffälliges Design der erfindungsgemäßen Beleuchtungseinrichtung, da von außen im Wesentlichen nur der transparente Lichtleitkörper der Beleuchtungseinrichtung sichtbar ist. Dieses unauffällige Design der ausgeschalteten Beleuchtungseinrichtung kommt insbesondere dann zum Tragen, wenn der Lichtleitkörper über die die Beleuchtungseinrichtung umgebenden Fahrzeugteile nach außen hervorragt. Im eingeschalteten Zustand der Beleuchtungseinrichtung leuchtet der Lichtleitkörper dann in der Farbe des von den Lichtquellen ausgesandten Lichts und wird äußerlich als massiver, in der entsprechenden Farbe leuchtender Körper wahrgenommen. Dieser Gegensatz zwischen Unauffälligkeit im ausgeschalteten Zustand und Auffälligkeit im eingeschalteten Zustand führt zu einem erheblichen Sicherheitsgewinn durch die von der Beleuchtungseinrichtung erzeugte Lichtverteilung.

Die erfindungsgemäße Beleuchtungseinrichtung umfasst vorzugsweise einen Grundkörper aus Metall, der eine elektrische Ansteuerschaltung für die Lichtquellen der Beleuchtungseinrichtung aufweisen kann. Insbesondere kann die Ansteuerschaltung auf einer in dem Grundkörper angeordneten Platine oder Leiterplatte ausgebildet sein. Die Lichtquellen sowie der Lichtleitkörper sind an dem Grundkörper bzw. der Platine befestigt. Der Grundkörper aus Metall dient einerseits zur Befestigung der Beleuchtungseinrichtung an dem Fahrzeug. Er ist vorzugsweise möglichst unauffällig, beispielsweise als eine flache Metallplatte mit einer Vertiefung zur Aufnahme der Platine und/oder der Lichtquellen, ausgebildet, sodass die äußerlich sichtbare Form und die Abmessungen der Beleuchtungseinrichtung hauptsächlich durch die Form und Abmessungen des Lichtleitkörpers und kaum durch die Form und Abmessungen des Grundkörpers bestimmt werden. Der Grundkörper dient außerdem als Kühlkörper für die Lichtquellen, um die durch diese während ihres Betriebs erzeugte Wärme abzuleiten und an die Umgebung abzugeben. Auf diese Weise werden eine Überhitzung der Lichtquellen und/oder der Ansteuerschaltung und die damit verbundenen Nachteile verhindert.

Die erfindungsgemäße Beleuchtungseinrichtung dient vorzugsweise zur Realisierung einer beliebigen Leuchtenfunktion. Insbesondere wird vorgeschlagen, dass die Beleuchtungseinrichtung als eine Blinkleuchte ausgebildet ist, die gelbes, bernsteinfarbenes beziehungsweise oranges Blinklicht aussendet. Dazu kann der Lichtleitkörper gelb, bernsteinfarben oder orange eingefärbt oder eine in der entsprechenden Farbe ausgestaltete Lichteintritts- und/oder Lichtaustrittsfläche aufweisen. Bevorzugt ist der Lichtleitkörper jedoch nicht eingefärbt, also farblos, wobei dann die Lichtquellen Licht in der gewünschten Farbe, nämlich gelb, bernsteinfarben oder orange, aussenden.

Die für die erfindungsgemäße Beleuchtungseinrichtung verwendeten Lichtquellen sind vorzugsweise als Halbleiterlichtquellen, insbesondere als Leuchtdioden (LEDs), ausgebildet. Die Leuchtdioden sind derart ausgebildet, dass sie im Rahmen der gesetzlichen Bestimmungen für die durch die Beleuchtungseinrichtung erzeugte Lichtverteilung Licht einer bestimmten Farbe aussenden. Das ausgesandte Licht kann bspw. gelb, bernsteinfarben, orange, weiß oder rot sein. Bei Verwendung mehrerer Leuchtdioden ist es sogar denkbar, dass die einzelnen Leuchtdioden oder einzelne Leuchtdiodengruppen Licht unterschiedlicher Farben aussenden. Das unterschiedlich farbene Licht kann entweder zur Erzielung einer gewünschten Lichtverteilung einer bestimmten Farbe überlagert, das heißt gemischt werden. Alternativ ist es aber auch denkbar, dass das unterschiedlich farbene Licht zur Erzeugung unterschiedlicher Lichtfunktionen genutzt wird, wobei die Leuchtdioden dann wechselweise zur Erzielung der jeweils gewünschten Lichtverteilung aktiviert werden. Die Leuchtdioden können derart ausgebildet sein, dass sie das Licht in der gewünschten Farbe entweder direkt aussenden, oder aber das von den Leuchtdioden ausgesandte Licht einer bestimmten Farbe wird mittels geeigneter Konversionsmaterialien in eine andere Farbe konvertiert. So ist es beispielsweise denkbar, dass blaues oder UV-Licht einer Leuchtdiode mittels Lumineszenz-Farbstoffen zumindest teilweise in gelbes Licht umgewandelt wird, wobei sich durch eine Überlagerung (eine sogenannte additive Mischung) des blauen beziehungsweise UV-Lichts mit dem gelben Licht weißes Licht ergibt.

Farbstoffen zumindest teilweise in gelbes Licht umgewandelt wird, wobei sich durch eine Überlagerung (eine sogenannte additive Mischung) des blauen beziehungsweise UV-Lichts mit dem gelben Licht weißes Licht ergibt.

Die erfindungsgemäße Beleuchtungseinrichtung ist insbesondere zur Montage an einem distalen Ende einer Lenkstange eines als Zweirad ausgebildeten Fahrzeugs ausgebildet. Das Zweirad kann beispielsweise als ein Fahrrad, ein E-Bike, ein Mofa, ein Mokick, ein Motorroller und/oder ein Motorrad ausgebildet sein. All diese Zweiräder verfügen über eine im Wesentlichen quer zur Fahrrichtung des Fahrzeugs verlaufende Lenkstange zum Lenken des Zweirads. An den äußeren Enden der Lenkstange sind Griffe vorgesehen, an denen der Fahrer des Zweirads die Lenkstange festhält und diese zum Lenken des Zweirads um eine zur Längsstreckung der Lenkstange im Wesentlichen senkrecht verlaufende Drehachse dreht. Die erfindungsgemäße Beleuchtungseinrichtung ist an einem distalen Ende der Lenkstange, das heißt außerhalb der Griffe, angeordnet und bildet somit den seitlichen Abschluss der Lenkstange. Selbstverständlich kann die Beleuchtungseinrichtung auch an beliebig anderen Stellen an dem Zweirad angeordnet werden. Ebenso ist es denkbar, die Beleuchtungseinrichtung bei einem Fahrzeug, insbesondere einem Kraftfahrzeug, mit mehr als zwei Rädern im Front- oder Heckbereich oder an einer Seite des Fahrzeugs anzuordnen.

Die Fahrzeuge, an denen die erfindungsgemäße Beleuchtungseinrichtung befestigt wird, verfügen vorzugsweise über eine geeignete Energiequelle zum Betrieb (zur Energieversorgung und zur Ansteuerung) der Lichtquellen der Beleuchtungseinrichtung. Die Energiequelle kann ein Dynamo, eine Lichtmaschine oder einer Batterie, vorzugsweise ein wiederaufladbarer Akku sein. Bei einem elektrisch angetriebenen Fahrzeug kann die Energiequelle gleichzeitig auch zur Speisung des Elektromotors zum Vortrieb des Fahrzeugs ausgestaltet sein.

Gemäß einer weiteren bevorzugten Ausführungsform der vorliegenden Erfindung wird vorgeschlagen, dass die Beleuchtungseinrichtung außer der mindestens einen Lichtquelle, die beispielsweise zur Erzeugung des Blinklichts dient, mindestens eine weitere Lichtquelle aufweist, deren Licht zumindest teilweise in den Lichtleitkörper eintritt und über einen Großteil einer Mantelfläche des Lichtleitkörpers austritt. Das Licht der mindestens einen weiteren Lichtquelle dient vorzugsweise zur Realisierung einer Leuchtenfunktion, insbesondere einer anderen Leuchtenfunktion durch die ersten Lichtquellen erzeugt wird. Vorzugsweise sind die weiteren Lichtquellen zum Aussenden von weißem oder rotem Licht ausgebildet. Das von der mindestens einen weiteren Lichtquelle ausgesandte weiße Licht dient bspw. zur Erzeugung eines Positions-, Begrenzungs- oder Standlichts oder eines Tagfahrlichts. Das von der mindestens einen weiteren Lichtquelle ausgesandte rote Licht dient bspw. zur Erzeugung eines Rücklichts oder eines Bremslichts. Gemäß dieser Ausführungsform wird der Lichtleitkörper der Beleuchtungseinrichtung zur Realisierung unterschiedlicher Leuchtenfunktionen und Lichtverteilungen genutzt.

Weitere Merkmale und Vorteile der erfindungsgemäßen Beleuchtungseinrichtung werden nachfolgend unter Bezugnahme auf die Zeichnungen näher erläutert. Dabei kann der erfindungsgemäße Beleuchtungseinrichtung die jeweils angegebenen Merkmale und Vorteile nicht nur in der in den Zeichnungen dargestellten und nachfolgend beschriebenen Kombination, sondern auch in jeder beliebig anderen Kombination aufweisen. Es zeigen:
- Figur 1: ein Fahrrad mit einer erfindungsgemäßen Beleuchtungseinrichtung;
- Figur 2: ein motorisiertes Zweirad mit der erfindungsgemäßen Beleuchtungseinrichtung;
- Figur 3: die erfindungsgemäße Beleuchtungseinrichtung gemäß einer bevorzugten Ausführungsform in perspektivischer Ansicht;
- Figur 4: die erfindungsgemäße Beleuchtungseinrichtung aus Figur 3 in einer Seitenansicht, teilweise im Schnitt, mit beispielhaft eingezeichnetem Strahlengang;
- Figur 5: die erfindungsgemäße Beleuchtungseinrichtung gemäß einer anderen bevorzugten Ausführungsform in einer schematischen Ansicht in einer Explosionsdarstellung; und
- Figur 6: eine Vorsatzoptik zur Bündelung des von Lichtquellen der Beleuchtungseinrichtung ausgesandten Lichts gemäß einer bevorzugten Ausführungsform.

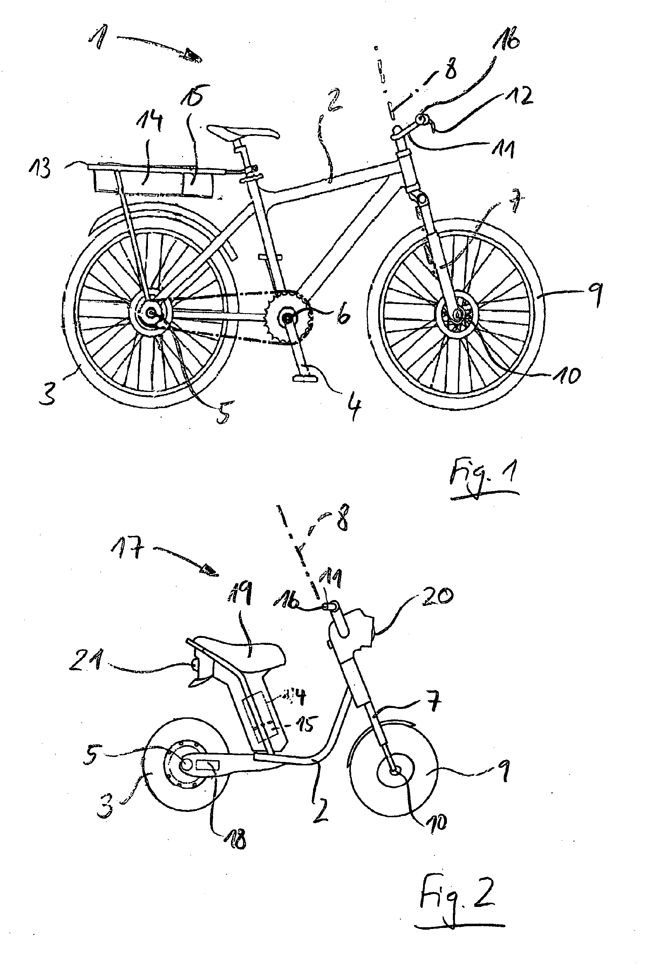

Die vorliegende Erfindung betrifft eine Beleuchtungseinrichtung für ein beliebiges Fahrzeug, insbesondere für ein Zweirad. In Figur 1 ist ein Zweirad beispielhaft als mit Muskelkraft über Pedale angetriebenes Fahrrad dargestellt. Selbstverständlich ist es denkbar, dass das Fahrrad einen Elektromotor, beispielsweise im Bereich einer Nabe eines Hinterrads oder im Bereich eines Tretlagers des Fahrrads, einen Energiespeicher zur Energieversorgung des Elektromotors sowie eine geeignete Ansteuerelektronik aufweist. Dadurch kann eine Tretbewegung des Fahrers elektromotorisch unterstützt werden. Derart elektromotorisch unterstützte Fahrräder werden auch als Pedelecs (Pedal Electric Cycles) bezeichnet.

Das Fahrrad ist in seiner Gesamtheit mit dem Bezugszeichen 1 bezeichnet. Es umfasst einen Rahmen 2, an dem ein Hinterrad 3 sowie Pedale 4 um im Wesentlichen parallel zueinander verlaufende Drehachsen 5, 6 drehbar gelagert sind. Ferner ist an dem Rahmen 2 eine Gabel 7 um eine Drehachse 8 drehbar gelagert, die im Wesentlichen senkrecht zu den Drehachsen 5, 6 verläuft. An der Gabel 7 ist ein Vorderrad 9 um eine Drehachse 10 drehbar gelagert. Mit der Gabel 7 ist ferner eine Lenkstange 11 drehfest verbunden, sodass die Lenkstange 11 ebenfalls um die Drehachse 8 drehbar an dem Rahmen 2 gelagert ist und ein Drehen der Lenkstange 11 um die Drehachse 8 zu einer entsprechenden Drehbewegung der Gabel 7 und des Vorderrads 9 und damit zu einer Fahrtrichtungsänderung des Fahrrads 1 führt. Bei auf Geradeausfahrt ausgerichteter Lenkstange 11, Gabel 7 und Vorderrad 9 verläuft die Drehachse 10 parallel zu den Drehachsen 5 und 6. An der Lenkstange 11 können beliebige Betätigungselemente für verschiedene Fahrradfunktionalitäten angeordnet und befestigt sein. So kann an der Lenkstange 11 beispielsweise eine Handbremse 12, eine Fahrradklingel, eine Gangwechselhebel, ein Reisecomputer oder ähnliches angeordnet sein. An den seitlichen, äußeren Enden der Lenkstange 11 sind Griffe angeordnet.

Falls das Fahrrad 1 als ein sogenanntes Pedelec ausgebildet ist, ist im Bereich der Drehachsen 5 und/oder 6 ein Nabenmotor (nicht dargestellt) zum Antrieb des Hinterrads 3 oder der Pedale 4 angeordnet. Ein entsprechender Energiespeicher, um den Nabenmotor mit elektrischer Energie zu versorgen, kann unterhalb eines Gepäckträgers 13 angeordnet sein. Der Energiespeicher ist beispielhaft dargestellt und mit dem Bezugszeichen 14 bezeichnet. Der Energiespeicher ist vorzugsweise als ein wiederaufladbarer Akku ausgebildet. Eine geeignete Ansteuerelektronik 15 zur Steuerung und/oder Regelung des Nabenmotors kann ebenfalls unterhalb des Gepäckträgers 13 angeordnet sein. Selbstverständlich ist es denkbar, beliebig anders ausgestaltete beziehungsweise an anderer Stelle angeordnete Elektromotoren zu verwenden. Ferner kann der Energiespeicher 14 und/oder die Ansteuerelektronik 15 auch an einer beliebig anderen Stelle des Fahrrads 1 angeordnet sein.

An den beiden distalen Enden der Lenkstange 11, außerhalb der Griffe ist jeweils eine erfindungsgemäße Beleuchtungseinrichtung 16 angeordnet, befestigt und über eine geeignete Ansteuerelektronik mit einer geeigneten Energiequelle elektrisch kontaktiert. Die Energiequelle kann beispielsweise der Akku 14 für den Elektromotor oder aber eine beliebig andere Energiequelle, beispielsweise ein separater Akku oder ein Dynamo, sein. Die Funktionalität zur Ansteuerung der Beleuchtungseinrichtungen 16 kann Teil der Ansteuerschaltung 15 oder aber als eine separate Ansteuerschaltung ausgebildet sein.

Figur 2 zeigt ein als Elektroroller 17 ausgebildetes Zweirad. Dem Fahrrad 1 entsprechende Bauteile des Elektrorollers 17 sind mit den gleichen Bezugszeichen bezeichnet. Ein Elektromotor zum Antrieb des Hinterrads 3 des Rollers 17 ist symbolisch eingezeichnet und mit dem Bezugszeichen 18 bezeichnet. Selbstverständlich kann auch hier statt des Elektromotors 18 ein Nabenmotor oder ein beliebig anderer Motor zum Antrieb des Hinterrads 3 eingesetzt werden. Ein wiederaufladbarer Akku 14 als Energiequelle für den Elektromotor 18 sowie die dazugehörige Ansteuerschaltung 15 sind in Figur 2 beispielhaft unterhalb eines Fahrersitzes 19 angeordnet. Der Akku 14 kann auch zur Energieversorgung eines Frontscheinwerfers 20 sowie einer Heckleuchte 21 des Rollers 17 dienen. Der Scheinwerfer 20 erzeugt beispielsweise eine Abblendlichtverteilung und/oder eine Fernlichtverteilung. Die Heckleuchte 21 erzeugt beispielsweise ein Rücklicht und/oder ein Bremslicht.

Zusätzlich zu den Beleuchtungseinrichtungen 20, 21 verfügt der dargestellte Elektroroller 17 im Bereich der distalen Enden der Lenkstange 11 auch über erfindungsgemäße Beleuchtungseinrichtungen 16, deren Aufbau und Funktionsweise nachfolgend im Detail erläutert wird. Auch bei der Figur 2 gezeigten Ausführungsform kann der Akku 14 oder eine beliebig andere Energiequelle die Beleuchtungseinrichtung 16 mit elektrischer Energie versorgen.

Die erfindungsgemäße Beleuchtungseinrichtung 16 wurde zur Verwendung in einem Fahrrad 1 bzw. einem E-Bike und einem Elektroroller 17 beschrieben. Selbstverständlich kann die Beleuchtungseinrichtung 16 auch in beliebig anderen Fahrzeugen eingesetzt werden, die bspw. mittels eines Benzinmotors angetrieben werden. Insbesondere ist die erfindungsgemäße Beleuchtungseinrichtung 16 für den Einsatz in Motorrädern vorgesehen. Ganz besonders bevorzugt ist dabei der Einsatz der Beleuchtungseinrichtung im Bereich des Tunings von Motorrädern und sogenannter Custom-Made-Motorräder.

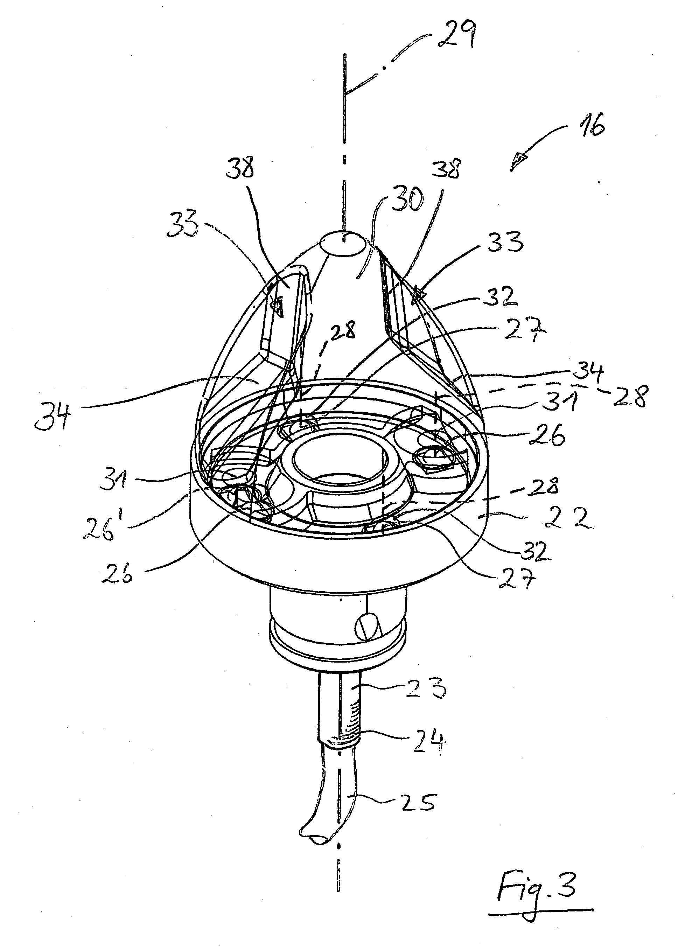

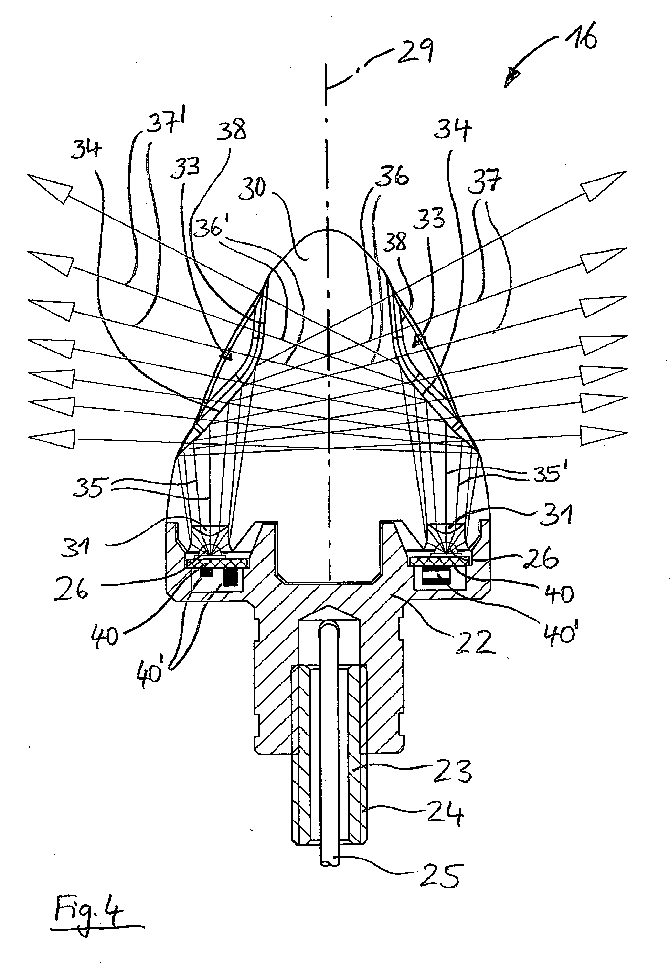

Ein bevorzugtes Ausführungsbeispiel der erfindungsgemäßen Beleuchtungseinrichtung wird nachfolgend anhand der Figuren 3 und 4 näher erläutert. Die Beleuchtungseinrichtung 16 umfasst einen im Wesentlichen scheibenförmigen.Grundkörper 22 aus Metall mit runder Grundfläche. Der Grundkörper 22 weist an seiner Unterseite ein im Wesentlichen hohlzylinderförmiges Befestigungselement 23 auf. Dieses ist vorzugsweise integraler Bestandteil des Grundkörpers 22 und aus demselben Bauteil gefertigt wie dieser. Das Befestigungselement 23 weist an seiner Außenumfangsseite ein Gewinde 24 auf, mit dem der Grundkörper 22 und damit die gesamte Beleuchtungseinrichtung 16 an dem Zweirad 1, 17, insbesondere an den distalen Enden der Lenkstange 11, befestigt werden kann. Zu diesem Zweck kann beispielsweise nach dem Einsetzen des Befestigungselements 23 in eine Öffnung am distalen Ende der Lenkstange 11 eine Befestigungsmutter auf das Gewinde 24 aufgeschraubt werden. Alternativ kann das Befestigungselement 23 auch mit seinem Gewinde 24 direkt in eine mit einem entsprechenden Innengewinde versehene Öffnung am distalen Ende der Lenkstange 11 eingeschraubt werden. Innen durch das Befestigungselement 23 verläuft ein Anschlusskabel 25, über das die Beleuchtungseinrichtung 16 beziehungsweise deren Lichtquellen mit elektrischer Energie versorgt und angesteuert werden können. Das Kabel 25 verläuft bei eingebauter Beleuchtungseinrichtung 16 vorzugsweise innen in der Lenkstange und kann so unauffällig zu der Ansteuerelektronik bzw. der Energiequelle geführt werden.

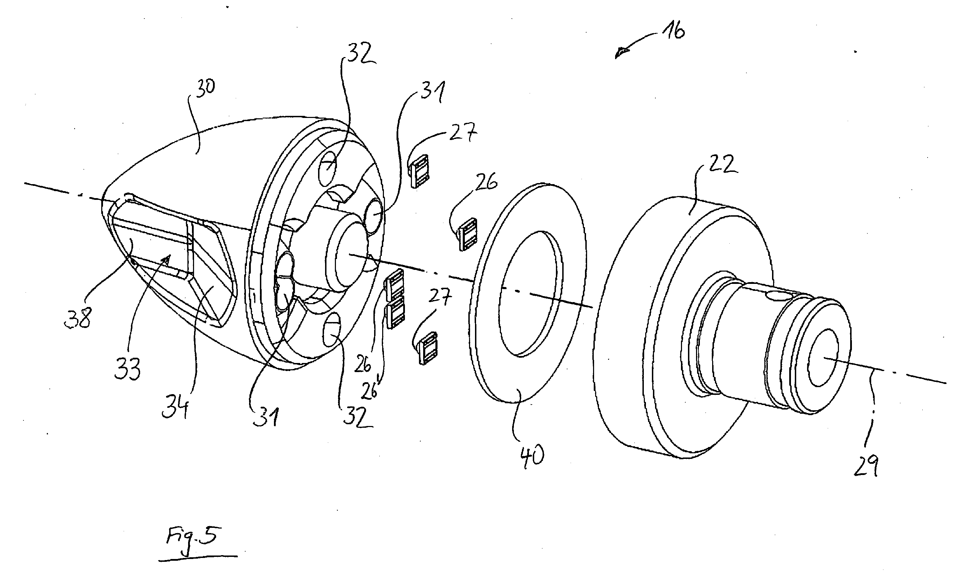

In dem Grundkörper 22 ist eine Platine oder Leiterplatte (in Figur 3 nicht dargestellt; vgl. aber Bezugszeichen 40 in den Figuren 4 und 5) mit einer Ansteuerschaltung zur Ansteuerung der Lichtquellen 26 der Beleuchtungseinrichtung 16 angeordnet. Die Ansteuerschaltung umfasst elektrische und/oder elektronische Bauelemente 40', die bspw. auf der Unterseite der Platine 40 angeordnet sein können. Ferner verfügt die Beleuchtungseinrichtung 16 auch über weitere Lichtquellen 27. Die Lichtquellen 26 sowie die weiteren Lichtquellen 27 sind auf der Oberseite der Platine 40 bzw. des Grundkörpers 22 angeordnet und befestigt. Die Lichtquellen 26 sowie die weiteren Lichtquellen 27 sind vorzugsweise als Halbleiterlichtquellen, insbesondere als Leuchtdioden (LEDs) ausgebildet. Jede der Lichtquellen 26 beziehungsweise der weiteren Lichtquellen 27 kann eine oder mehrere lichtemittierende Flächen (sog. LED-Chips) aufweisen, wobei mehrere LED-Chips einer Leuchtdiode gemeinsam oder separat ansteuerbar sein können. Die LED-Chips der Leuchtdioden 26 und/oder der weiteren Leuchtdioden 27 können Licht der gleichen oder unterschiedlicher Farbe aussenden. Selbstverständlich ist es auch denkbar, dass anstelle einzelner Leuchtdioden 26 beziehungsweise einzelner weiterer Leuchtdioden 27 jeweils mehrere LEDs vorgesehen sind.

Die Leuchtdioden 26 sind bezüglich einer Längsachse 29 der Beleuchtungseinrichtung 16 an diagonal gegenüberliegenden Seiten auf der Oberseite der Platine 40 bzw. des Grundkörpers 22 angeordnet. Ebenso sind die weiteren Leuchtdioden 27 an gegenüberliegenden Seiten der Oberseite des Grundkörpers 22 angeordnet. Die Leuchtdioden 26 und die weiteren Leuchtdioden 27 sind jeweils um 90 Grad zueinander versetzt angeordnet. Die Leuchtdioden 26 und die weiteren Leuchtdioden 27 sind derart angeordnet und ausgerichtet, dass deren Hauptabstrahlrichtungen 28 im Wesentlichen parallel zu der Längsachse 29 der Beleuchtungseinrichtung 16 verlaufen.

An dem Grundkörper 22 ist außerdem ein massiver Lichtleitkörper 30 aus einem transparenten Material, insbesondere aus einem Acrylharz mit einem Brechungsindex von etwa 1,5, ganz besonders bevorzugt aus Polymethylmethacrylat (PMMA) mit einem Brechungsindex von 1,492, angeordnet. Denkbar ist auch, dass das transparente Material aus Polycarbonat (PC) mit einem Brechungsindex von 1,585 besteht. Der Lichtleitkörper 30 ist in dem dargestellten Ausführungsbeispiel als ein Kegel mit einer konvex gewölbten Mantelfläche ausgebildet. Die Grundfläche des kegelförmigen Lichtleitkörpers 30 entspricht in etwa der Grundfläche der Oberseite des Grundkörpers 22. Die Grundfläche des Lichtleitkörpers 30 ist in dem dargestellten Ausführungsbeispiel also ebenfalls kreisförmig. Die Abmessungen des Lichtleitkörpers 30 und des Grundkörpers 22 sind derart aufeinander abgestimmt und der Lichtleitkörper 30 ist derart auf dem Grundkörper 22 befestigt, dass die Mantelfläche des Lichtleitkörpers 30 im Wesentlichen bündig in den bezüglich der Längsachse 29 radial nach außen gerichteten Seitenrand des Grundkörpers 22 übergeht.

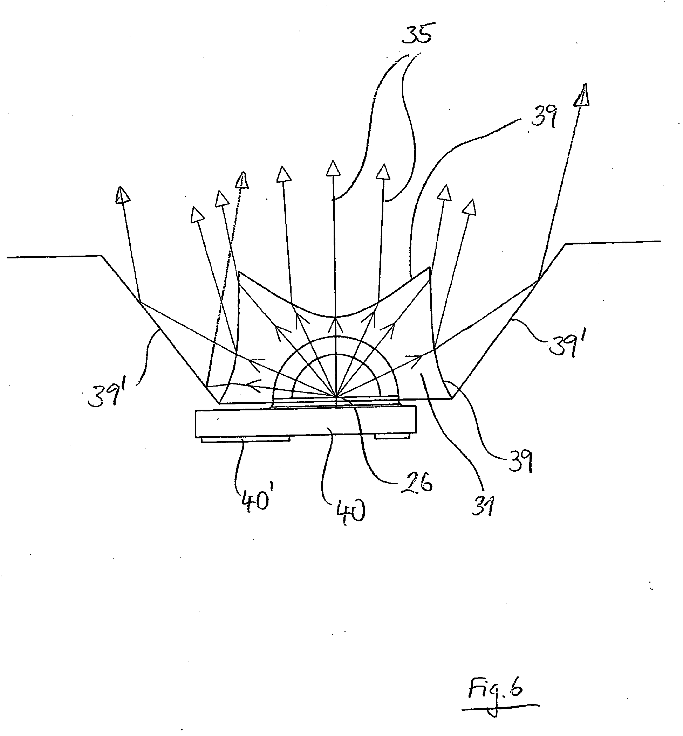

In der größtenteils ebenen Grundfläche des Lichtleitkörpers 30 sind an der Position der Lichtquellen 26, 27 entsprechenden Stellen Vertiefungen 31 für die Leuchtdioden 26 sowie Vertiefungen 32 für die weiteren Leuchtdioden 27 ausgebildet. Die Leuchtdioden 26 beziehungsweise die weiteren Leuchtdioden 27 sind vorzugsweise derart in den Vertiefungen 31 beziehungsweise 32 angeordnet, dass der Lichtleitkörper 30 beziehungsweise die Wandungen der Vertiefungen 31, 32 den gesamten 180°-Halbraum umfassen, in den die Leuchtdioden 26 beziehungsweise die weiteren Leuchtdioden 27 Licht abstrahlen. Auf diese Weise wird sichergestellt, dass ein möglichst großer Anteil des von den Leuchtdioden 26, 27 ausgesandten Lichts in den Lichtleitkörper 30 eingekoppelt wird. Vorzugsweise sind in den den Leuchtdioden 26 zugeordneten Vertiefungen 31 Vorsatzoptiken (nicht dargestellt) integriert, die das von den Lichtquellen 26 ausgesandte Licht beim Einkoppeln in den Lichtleitkörper 30 bündeln, insbesondere kollimieren. Die Vorsatzoptiken sind in den Figuren der besseren Übersichtlichkeit wegen nicht explizit dargestellt. Ein Beispiel für eine solche Vorsatzoptik für den Spezialfall von zwei nebeneinander angeordneten LEDs ist jedoch in Figur 6 dargestellt. Die Wandungen der Vertiefungen 31, 32 bilden also die Lichteintrittsflächen des Lichtleitkörpers 30.

Nachfolgend wird die Funktionsweise der erfindungsgemäßen Beleuchtungseinrichtung 16 zunächst bezüglich des von den Leuchtdioden 26 ausgesandten Lichts näher erläutert. Das von den Leuchtdioden 26 ausgesandte Licht wird - wie gesagt - durch die in die Wandungen der Vertiefungen 31 integrierten Vorsatzoptiken gebündelt und in den Lichtleitkörper 30 eingekoppelt. Dabei entspricht eine Hauptrichtung des eingekoppelten Lichtbündels in etwa der Hauptabstrahlrichtung 28 der Leuchtdioden 26. Selbstverständlich ist es jedoch denkbar, dass die Leuchtdioden 26 und/oder die Vorsatzoptiken in den Wandungen der Vertiefungen 31 derart schräg angeordnet sind, dass die Hauptrichtung des eingekoppelten Lichtbündels nicht parallel sondern schräg zu der Längsachse 29 des Lichtleitkörpers 30 und zu der Hauptabstrahlrichtung der Leuchtdioden 26 verläuft.

In der Mantelfläche des Lichtleitkörpers 30 ist in einer die Längsachse 29 und die Hauptabstrahlrichtungen 28 der Leuchtdioden 26 umfassenden vertikalen Schnittebene jeweils oberhalb der Leuchtdioden 26 eine längliche Vertiefung 33 ausgebildet, deren Längsachse im Wesentlichen parallel zur Längsachse 29 des Lichtleitkörpers 30 verläuft. In der die Längsachse 29 und die Hauptabstrahlrichtungen 28 der Leuchtdioden 26 umfassenden vertikalen Schnittebene betrachtet haben die Vertiefungen 33 die Form eines Dreiecks mit stumpfem Winkel, wobei die Mantelfläche des Lichtleitkörpers 30 die (geringfügig konvex gewölbte) Grundfläche dieses Dreiecks und zwei in einem stumpfen Winkel zueinander angeordnete Grundflächen der Vertiefung 33 (im Wesentlichen ebene) Schenkel des Dreiecks bilden. Die Querschnittsform der Vertiefungen 33 ist auch gut in Figur 4 zu erkennen. In einem Sagittalschnitt durch die Vertiefungen 33 sind die Grundflächen der Vertiefungen 33 geringfügig gewölbt, insbesondere konkav gewölbt, ausgebildet.

Die unteren Grundflächen 34 der Vertiefungen 33 verlaufen schräg zur Längsachse 29 des Lichtleitkörpers 30 und zu den Hauptabstrahlrichtungen 28 der Leuchtdioden 26. Vorzugsweise stehen die unteren Grundflächen 34 in einem Winkel von etwa 45° bezüglich der Längsachse 29 beziehungsweise der Hauptabstrahlrichtungen 28 der Leuchtdioden 26. Das in den Lichtleitkörper 30 eingekoppelte Lichtbündel der Leuchtdioden 26 trifft größtenteils in einem so flachen Winkel auf die unteren Grundflächen 34 der Vertiefungen 33, dass sie an diesen in Richtung der Längsachse 29 des Lichtleitkörpers 30 und der gegenüberliegenden Grundflächen 34 totalreflektiert werden. Die unteren Grundflächen 34 bilden somit totalreflektierende Grenzflächen des Lichtleitkörpers 30.

Die totalreflektierten Lichtstrahlen der eingekoppelten Lichtbündel der Leuchtdioden 26 treffen dann so steil auf die entsprechenden unteren Grundflächen 34 der gegenüberliegenden Vertiefungen 33, dass die Lichtstrahlen über die Grundflächen 34 aus dem Lichtleitkörper 30 ausgekoppelt werden. Somit dienen die unteren Grundflächen 34 der Vertiefungen 33 auch als Lichtaustrittsflächen des Lichtleitkörpers 30.

Figur 4 zeigt eine Seitenansicht der erfindungsgemäßen Beleuchtungseinrichtung 16, wobei der Lichtleitkörper 30 in einer Schnittansicht entlang einer die Längsachse 29 sowie die Hauptabstrahlrichtungen 28 der Leuchtdioden 26 umfassenden vertikalen Schnittebene gezeigt ist. Der kegelförmige Lichtleitkörper 30 ist bis auf die Vertiefungen 33 rotationssymmetrisch zur Längsachse 29 ausgebildet. Das von der linken Leuchtdiode 26 ausgesandte Licht gelangt über die Wandungen der Aussparung 31 und über eine darin gegebenenfalls ausgebildete Vorsatzoptik in den Lichtleitkörper 30 und trifft auf die der linken Leuchtdiode 26 zugeordnete untere Grundfläche 34 der linken Vertiefung 33. Dies wird in Figur 4 durch einen beispielhaft eingezeichneten Lichtstrahl 35 veranschaulicht. Der Lichtstrahl 35 trifft in einem derart flachen Winkel auf die untere Grundfläche 34, dass er an dieser totalreflektiert wird. Der totalreflektierte Lichtstrahl ist mit dem Bezugszeichen 36 bezeichnet. Der Lichtstrahl 36 gelangt auf die untere Grundfläche 34 der gegenüberliegenden Vertiefung 33. Der Lichtstrahl 36 trifft in einem derart steilen Winkel auf die untere Grundfläche 34 der gegenüberliegenden Vertiefung 33, dass er aus dem Lichtleitkörper 30 ausgekoppelt wird und die Beleuchtungseinrichtung 16 zur Erzeugung einer der entsprechenden Leuchtenfunktion, bspw. eines Blinklichts, verlässt. Der ausgekoppelte Lichtstrahl ist mit dem Bezugszeichen 37 bezeichnet.

In entsprechender Weise ergeht es dem von der rechten Leuchtdiode 26 ausgesandten Licht. Die für das Licht der rechten Leuchtdiode 26 beispielhaft eingezeichneten Lichtstrahlen sind mit 35', 36', 37' bezeichnet. In Figur 4 sind die zwei im Wesentlichen gegenüberliegenden Hauptabstrahlrichtungen des ausgekoppelten Lichts durch die Lichtstrahlen 37, 37' beispielhaft veranschaulicht. Die ausgekoppelten Lichtstrahlen (zum Beispiel die Lichtstrahlen 37, 37') können in der dargestellten vertikalen Schnittebene auch weiter nach oben und/oder weiter nach unten als die eingezeichneten Lichtstrahlen 37, 37' aus dem Lichtleitkörper 30 ausgekoppelt werden. Entscheidend ist jedoch, dass die ausgekoppelten Lichtstrahlen 37, 37' in zwei bezüglich einer zu der Zeichenebene der Figur 4 senkrecht stehenden und durch die Längsachse 29 sowie die Hauptabstrahlrichtungen 28 der weiteren Lichtquellen 27 verlaufenden vertikalen Schnittebene gegenüberliegende Seiten aus dem Lichtleitkörper 30 ausgekoppelt werden. Die ausgekoppelten Lichtstrahlen 37, 37' können als in der dargestellten Zeichenebene nahezu beliebig ausgerichtet sein. In einem eingebauten Zustand würden die ausgekoppelten Lichtstrahlen 37, 37' als in Fahrtrichtung nach vorne bzw. nach hinten strahlen, wobei sie auch nach schräg vorne bzw. nach schräg hinten strahlen können.

Es ist anhand der Figur 4 deutlich zu erkennen, dass die unteren Grundflächen 34 der Vertiefungen 33 jeweils als totalreflektierende Grenzfläche einerseits sowie als Lichtaustrittsfläche andererseits dienen. Selbstverständlich ist es denkbar, dass nicht das gesamte an den Grenzflächen 34 totalreflektierte Licht (beispielsweise Lichtstrahlen 36, 36') durch die gegenüberliegenden Lichtaustrittsflächen ausgekoppelt wird. Es wäre denkbar, dass ein Teil des totalreflektierten Lichts (zum Beispiel Lichtstrahlen 36, 36') auch über die oberen Grundflächen 38 der Vertiefungen 33 aus dem Lichtleitkörper 30 ausgekoppelt wird. Ebenso wäre es denkbar, dass das von den Grenzflächen 34 total reflektierte Licht (zum Beispiel die Lichtstrahlen 36, 36') nicht über Grundflächen 34, 38 der Vertiefungen 33, sondern über Mantelflächen des Lichtleitkörpers 30, die in der Nähe beziehungsweise neben den Vertiefungen 33 angeordnet sind, ausgekoppelt wird. Ferner wäre es denkbar, dass nicht das gesamte eingekoppelte Licht (zum Beispiel die Lichtstrahlen 36, 36') an den unteren Grundflächen 34 totalreflektiert werden, sondern an Mantelflächen des Lichtleitkörpers 30, die in der Nähe beziehungsweise neben den Vertiefungen 33 angeordnet sind, totalreflektiert oder über diese ausgekoppelt wird.

Die Leuchtdioden 26 senden vorzugsweise gelbes, bernsteinfarbenes beziehungsweise oranges Licht aus, sodass das aus der erfindungsgemäßen Beleuchtungseinrichtung 16 durch die Leuchtdioden 26 erzeugte ausgekoppelte Licht (zum Beispiel die Lichtstrahlen 37, 37') zur Realisierung einer Blinklichtfunktion des Fahrzeugs 1, 17 dienen können. Dazu wird die Beleuchtungseinrichtung 16 vorzugsweise derart an den distalen Enden der Lenkstange 11 des Fahrzeugs 1, 17 positioniert und befestigt, dass die ausgekoppelten Lichtstrahlen 37, 37' in Fahrtrichtung beziehungsweise entgegen der Fahrtrichtung ausgerichtet sind. Auf diese Weise kann mittels einer einzigen erfindungsgemäßen Beleuchtungseinrichtung 16 die Funktionalität eines vorderen sowie die Funktionalität eines rückwärtigen Blinklichts realisiert werden.

Die erfindungsgemäße Beleuchtungseinrichtung 16 ist besonders kleinbauend und vom äußeren Erscheinungsbild her im eingebauten Zustand besonders unauffällig. Die äußerlich sichtbare Form und die äußeren Abmessungen der in das Fahrzeug 1, 17 eingebauten Beleuchtungseinrichtung 16 sind im Wesentlichen durch die äußere Form und die Abmessungen des Lichtleitkörpers 30 definiert beziehungsweise vorgegeben. Auf den Einsatz eines voluminösen und großbauenden Gehäuses für die Beleuchtungseinrichtung wird bewusst verzichtet. Stattdessen bildet der Lichtleitkörper 30 gewissermaßen selbst das Gehäuse der Beleuchtungseinrichtung 16. Das transparente Material des Lichtleitkörpers 30 fällt im ausgeschalteten Zustand der Beleuchtungseinrichtung 16 und im am Fahrzeug angebauten Zustand kaum auf und passt sich harmonisch in das Gesamterscheinungsbild des Fahrzeugs ein.

Das Licht der weiteren Leuchtdioden 27 dient vorzugsweise zur Erzeugung einer von der ersten Leuchtenfunktion abweichenden weiteren Leuchtenfunktion. Dazu senden sie vorzugsweise Licht einer anderen Farbe als der Farbe des von den Leuchtdioden 26 ausgesandten Lichts aus. In dem dargestellten Ausführungsbeispiel senden die weiteren Leuchtdioden 27 weißes Licht aus. Dieses Licht kann bspw. zur Realisierung eines Positions-, Begrenzungs- oder Standlichts oder zur Realisierung eines Tagfahrlichts genutzt werden. Alternativ können die weiteren Leuchtdioden 27 auch rotes Licht aussenden, das beispielsweise zur Realisierung eines Rücklichts oder zur Realisierung eines Bremslichts genutzt werden kann. Das von den Leuchtdioden 26 ausgesandte Licht erzeugt nach der Totalreflexion und der Auskopplung aus dem Lichtleitkörper 30 vorzugsweise eine gerichtete, gebündelte Lichtverteilung, während das von den weiteren Leuchtdioden 27 ausgesandte Licht vorzugsweise eine ungerichtete, diffuse Lichtverteilung erzeugt. Es wäre denkbar, dass das von den Leuchtdioden 26 ausgesandte Licht zur Realisierung der Funktion eines Positions-, Begrenzungs- oder Standlichts oder eines Tagfahrlichts (bei Verwendung von weißes Licht aussendenden LEDs 26) bzw. zur Realisierung der Funktion eines Rücklichts oder eines Bremslichts (bei Verwendung von rotes Licht aussendenden LEDs 26) in einer gerichteten Art und Weise dient.

Bei dem erfindungsgemäßen Ausführungsbeispiel wird das von den weiteren Lichtdioden 27 in die Vertiefungen 32 ausgesandte Licht in den Lichtleitkörper 30 eingekoppelt. Diejenigen Lichtstrahlen, die relativ flach auf den Mantelfläche treffen, werden an der Mantelfläche des Lichtleitkörpers 30 totalreflektiert. Andere Lichtstrahlen, die relativ steil auf die Mantelfläche treffen, werden aus dem Lichtleiterkörper 30 ausgekoppelt. Eine Auskopplung der Lichtstrahlen kann auch nach einer oder mehreren Totalreflexionen an der Mantelfläche des Lichtleitkörpers 30 erfolgen. In senkrecht zur Längsachse 29 verlaufenden horizontalen Schnittebenen durch den Lichtleitkörper 30 treten die ausgekoppelten Lichtstrahlen des durch die weiteren Leuchtdioden 27 erzeugten Lichts in etwa über den gesamten Umfang des Lichtleitkörpers 30 verteilt aus diesem aus. Das heißt, dass die Lichtstrahlen des durch die weiteren Leuchtdioden 27 erzeugten Lichts in einer senkrecht zur Längsachse 29 verlaufenden Schnittebene in etwa über den gesamten 360°-Umfang radial zur Längsachse 29 aus dem Lichtleitkörper 30 ausgekoppelt werden. Mit anderen Worten, leuchtet der gesamte Lichtleitkörper 30 bei eingeschalteten weiteren Leuchtdioden 27 in der Farbe des von den weiteren Leuchtdioden 27 ausgesandten Lichts, bspw. weiß oder rot.

In einer bevorzugten Anwendung der erfindungsgemäßen Beleuchtungseinrichtung 16 sind im Normalbetrieb des Fahrzeugs 1, 17 die Lichtquellen 26 deaktiviert und die weiteren Lichtquellen 27 aktiviert, wobei sie beispielsweise weißes Licht zur Realisierung eines Positions-, Begrenzungs-, oder Standlichts aussenden. Zusätzlich können bei Bedarf, insbesondere vor und während einer Fahrtrichtungsänderung, die Leuchtdioden 26 zumindest zeitweise aktiviert werden, um mittels Blinklicht die anstehende Fahrtrichtungsänderung nach außen hin zu signalisieren. Vorzugsweise sind die weiteren Leuchtdioden 27 während der Aktivierung der Leuchtdioden 26 gedimmt, das heißt sie werden mit einem reduzierten Betriebsstrom betrieben, oder sogar ganz deaktiviert. Auf diese Weise können mit einer einzigen erfindungsgemäßen Beleuchtungseinrichtung 16 unterschiedliche Leuchtenfunktionen (z.B. vorderes Blinklicht, rückwärtiges Blinklicht und Positions- oder Tagfahrlicht) realisiert werden. Entsprechendes gilt natürlich auch für den Fall, dass die weiteren Leuchtdioden 27 rotes Licht zur Realisierung eines Rücklichts oder eines Bremslichts in Kombination mit dem durch die Leuchtdioden 26 realisierten Blinklicht ausgeführt sind.

In Figur 5 ist ein weiteres Ausführungsbeispiel einer erfindungsgemäßen Beleuchtungseinrichtung 16 dargestellt, bei dem auf einer Seite der Leuchte 16 statt einer der Leuchtdioden 26 mehrere, nebeneinander angeordnete Leuchtdioden 26, 26' eingesetzt werden, um bspw. in dem Fall, dass die Leuchtdioden 26, 26' Licht derselben Farbe aussenden, die Beleuchtungsstärke der entsprechenden Leuchtenfunktion zu erhöhen. Durch die Wahl von Leuchtdioden 26, 26', die unterschiedlich farbiges Licht aussenden, können zudem verschiedene Leuchten- bzw. Lichtfunktionen mit ein- und derselben Leuchte 16 realisiert werden. Zur Aufnahme der beiden Leuchtdioden 26, 26' ist die entsprechende Vertiefung 31 nicht zylinderförmig ausgebildet, sondern umfasst zwei nebeneinander angeordnete und ineinander übergehende Zylinder, deren Zylinderachsen vorzugsweise parallel zu der optischen Achse 29 verlaufen. In dem dargestellten Ausführungsbeispiel sind für die weiteren Leuchtdioden 27 (nicht dargestellt) jeweils einzelne Leuchtdioden vorgesehen. Es ist jedoch auch denkbar, dass alternativ oder zusätzlich zu den doppelt oder mehrfach ausgebildeten Leuchtdioden 26, 26' auch doppelt oder mehrfach ausgebildete weitere Leuchtdioden 27 vorgesehen sind.

Bei dem dargestellten Ausführungsbeispiel wäre es bspw. denkbar, dass eine der beiden Leuchtdioden, bspw. die Leuchtdiode 26, weißes Licht und die andere Leuchtdiode, bspw. die Leuchtdiode 26', gelbes Licht aussendet. Das weiße Licht könnte bspw. zur Realisierung der Funktion eines Positions-, Begrenzungs- oder Standlichts oder eines Tagfahrlichts oder sogar einer Scheinwerferfunktion zur Ausleuchtung der Fahrbahn vor dem Zweirad 1, 17 (insbesondere bei Verwendung in einem als Fahrrad 17 ausgebildeten Zweirad) in gerichteter Art und Weise, vorzugsweise in Fahrtrichtung nach vorne gerichtet, genutzt werden. Das gelbe Licht könnte bspw. zur Realisierung der Funktion eines Blinklichts nach hinten und/oder nach vorne gerichtet genutzt werden.

Ferner wäre es bspw. denkbar, dass eine der beiden Leuchtdioden, bspw. die Leuchtdiode 26, rotes Licht und die andere Leuchtdiode, bspw. die Leuchtdiode 26', gelbes Licht aussendet. Das rote Licht könnte bspw. zur Realisierung der Funktion eines Positions-, Begrenzungs- oder Standlichts oder eines Bremslichts in gerichteter Art und Weise, vorzugsweise entgegen der Fahrtrichtung nach hinten gerichtet, und das gelbe Licht zur Realisierung eines Blinklichts genutzt werden.

Schließlich wäre es auch denkbar, dass eine der beiden Leuchtdioden, bspw. die Leuchtdiode 26, weißes Licht und die andere Leuchtdiode, bspw. die Leuchtdiode 26', rotes Licht aussendet. Das weiße Licht könnte bspw. zur Realisierung der Funktion eines Positions-, Begrenzungs- oder Standlichts oder eines Tagfahrlichts oder sogar einer Scheinwerferfunktion (insbesondere bei Verwendung in einem als Fahrrad 17 ausgebildeten Zweirad) in gerichteter Art und Weise, vorzugsweise in Fahrtrichtung nach vorne gerichtet, genutzt werden. Das rote Licht könnte bspw. zur Realisierung der Funktion eines Positions-, Begrenzungs- oder Standlichts oder eines Bremslichts in gerichteter Art und Weise, vorzugsweise entgegen der Fahrtrichtung nach hinten gerichtet, genutzt werden.

Bei der Doppel- oder Mehrfachausführung der Leuchtdioden 26 erfolgt trotz der sich im Inneren des Lichtleitkörpers 30 kreuzenden verschieden farbigen Lichtstrahlen keine Mischung der Farben, so dass mit einem transparenten Lichtleitkörper 30 über die gesamte 360°-Mantelfläche in definierten Richtungen Licht mit unterschiedlicher Farbe ausgesandt werden kann. Durch die Doppel- oder Mehrfachausführung der Leuchtdioden 26 und/oder der Leuchtdioden 27 kann also auch die Anzahl der verschiedenen Leuchten- bzw. Lichtfunktionen, die mit ein- und derselben Leuchte 16 realisiert werden können, weiter erhöht werden. Dadurch ergibt sich eine besonders klein bauende, multifunktionale, hochintegrierte Leuchte 16.

In Figur 6 ist eine Vorsatzoptik zur Bündelung, insbesondere zur Kollimation, des von den Leuchtdioden 26, 26' ausgesandten Lichts vor bzw. während der Einkopplung in den Lichtleitkörper 30 im Detail dargestellt. Die Bündelung des Lichts erfolgt dabei durch Brechung beim Eintritt des Lichts in die Vorsatzoptik über Lichteintrittsflächen 39 und/oder durch Totalreflexion an Grenzflächen 39' der Vorsatzoptik. Die dargestellte Vorsatzoptik ist vorzugsweise integraler Bestandteil der Lichteintrittsfläche des Lichtleitkörpers 30. Selbstverständlich wäre es auch denkbar, die in Figur 6 dargestellte Vorsatzoptik separat von dem Lichtleitkörper 30 auszugestalten. In entsprechender Weise kann auch eine Vorsatzoptik zur Bündelung des von einer einzigen Leuchtdiode 26 ausgesandten Lichts ausgestaltet sein, wobei dann die Vertiefung 31, in der die Leuchtdiode 26 angeordnet ist, vorzugsweise zylinderförmig mit kreisrundem oder ellipsenförmigen Querschnitt ausgebildet ist.

## Patentansprüche

1. Beleuchtungseinrichtung (16) für ein Fahrzeug, insbesondere für ein Zweirad (1, 17), die Beleuchtungseinrichtung (16) umfassend:
- mindestens eine Lichtquelle (26) zum Aussenden von Licht und
- einen massiven Lichtleitkörper (30) aus transparentem Material, mit
- mindestens einer Lichteintrittsfläche (31) zum Einkoppeln zumindest eines Teils des ausgesandten Lichts,
- mindestens einer Grenzfläche (34) zur Totalreflexion zumindest eines Teils des eingekoppelten Lichts, und
- mindestens einer Lichtaustrittsfläche zum Auskoppeln zumindest eines Teils des totalreflektierten Lichts,
wobei die äußerlich sichtbare Form und die äußeren Abmessungen der Beleuchtungseinrichtung (16) im am Fahrzeug montierten Zustand durch die Form und Abmessungen des Lichtleitkörpers (30) definiert sind, **dadurch gekennzeichnet, dass** die Beleuchtungseinrichtung (16) mindestens zwei Lichtquellen (26) und der Lichtleitkörper (30) zwei im Wesentlichen gegenüberliegende Lichtaustrittsflächen aufweist, wobei von den Lichtquellen (26) ausgesandtes Licht nach einer Einkopplung durch Lichteintrittsflächen (31) und einer Totalreflexion an Grenzflächen (34) die Beleuchtungseinrichtung (16) durch die Lichtaustrittsflächen in zwei im Wesentlichen gegenüberliegenden Hauptabstrahlrichtungen verlässt.

2. Beleuchtungseinrichtung (16) nach Anspruch 1, **dadurch gekennzeichnet, dass** die mindestens eine Lichtquelle (26) eine Halbleiterlichtquelle, insbesondere eine Leuchtdiode, umfasst.

3. Beleuchtungseinrichtung (16) nach Anspruch 1 oder 2, **dadurch gekennzeichnet, dass** die mindestens eine Lichtquelle (26) farbiges, insbesondere gelbes, bernsteinfarbenes oder oranges, Licht aussendet.

4. Beleuchtungseinrichtung (16) nach einem der Ansprüche 1 bis 3, **dadurch gekennzeichnet, dass** der Lichtleitkörper (30) als ein Kegel mit einer in einer Schnittebene entlang einer Längsachse (29) des Lichtleitkörpers (30) betrachtet konvex gewölbten Mantelfläche ausgebildet ist.

5. Beleuchtungseinrichtung (16) nach einem der Ansprüche 1 bis 4, **dadurch gekennzeichnet, dass** die mindestens eine totalreflektierende Grenzfläche (34) jeweils in einer Vertiefung (33) einer Mantelfläche des Lichtleitkörpers (30) ausgebildet ist.

6. Beleuchtungseinrichtung (16) nach einem der Ansprüche 1 bis 5, **dadurch gekennzeichnet, dass** Teilflächen einer Außenfläche des Lichtleitkörpers (30) jeweils sowohl eine totalreflektierende Grenzfläche (34) für ein erstes Lichtbündel als auch eine Lichtaustrittsfläche für ein zweites Lichtbündel bilden.

7. Beleuchtungseinrichtung (16) nach Anspruch 6, **dadurch gekennzeichnet, dass** der Lichtleitkörper (30) zwei im Wesentlichen gegenüberliegende Teilflächen der Außenfläche aufweist, wobei eine erste Teilfläche eine totalreflektierende Grenzfläche (34) für ein erstes Lichtbündel und eine Lichtaustrittfläche für ein zweites Lichtbündel bildet, und eine zweite Teilfläche eine totalreflektierende Grenzfläche (34) für das zweite Lichtbündel und eine Lichtaustrittfläche für das erste Lichtbündel bildet.

8. Beleuchtungseinrichtung (16) nach einem der Ansprüche 1 bis 7, **dadurch gekennzeichnet, dass** die Beleuchtungseinrichtung (16) als eine Blinkleuchte des Fahrzeugs ausgebildet ist.

9. Beleuchtungseinrichtung (16) nach einem der Ansprüche 1 bis 8, **dadurch gekennzeichnet, dass** die Beleuchtungseinrichtung (16) zur Montage an einem distalen Ende einer Lenkstange (11) eines als Zweirad (1, 17) ausgebildeten Fahrzeugs ausgebildet ist.

10. Beleuchtungseinrichtung (16) nach einem der Ansprüche 1 bis 9, **dadurch gekennzeichnet, dass** die Beleuchtungseinrichtung (16) außer der mindestens einen Lichtquelle (26) mindestens eine weitere Lichtquelle (27) aufweist, deren Licht zumindest teilweise in den Lichtleitkörper (30) eintritt und verteilt über einen Großteil einer Mantelfläche des Lichtleitkörpers (30) aus diesem austritt.

11. Beleuchtungseinrichtung (16) nach Anspruch 10, **dadurch gekennzeichnet, dass** das Licht der mindestens einen weiteren Lichtquelle (27) bezüglich einer Längsachse (29) des Lichtleitkörpers (30) radial nach außen gerichtet aus dem Lichtleitkörper (30) austritt.

12. Beleuchtungseinrichtung (16) nach Anspruch 10 oder 11, **dadurch gekennzeichnet, dass** die mindestens eine weitere Lichtquelle (27) zur Aussendung von weißem oder rotem Licht ausgebildet ist.

13. Beleuchtungseinrichtung (16) nach Anspruch 12, **dadurch gekennzeichnet, dass** das von der mindestens einen weiteren Lichtquelle (27) ausgesandte weiße Licht zur Erzeugung eines Positions-, Begrenzungs- oder Standlichts oder eines Tagfahrlichts oder das von der mindestens einen weiteren Lichtquelle (27) ausgesandte rote Licht zur Erzeugung eines Rücklichts oder eines Bremslichts dient.

14. Beleuchtungseinrichtung (16) nach einem der Ansprüche 1 bis 13, **dadurch gekennzeichnet, dass** die Beleuchtungseinrichtung (16) einen Grundkörper (22) aus Metall umfasst, der eine elektrische Ansteuerschaltung für die mindestens eine Lichtquelle (26) und gegebenenfalls für die mindestens eine weitere Lichtquelle (27) aufweist, wobei die mindestens eine Lichtquelle (26) und gegebenenfalls die mindestens eine weitere Lichtquelle (27) sowie der Lichtleitkörper (30) an dem Grundkörper (22) befestigt sind.

## Claims

1. A lighting device (16) for a vehicle, in particular for a bicycle (1, 17), the lighting device (16) including:
- at least one light source (26) for emitting light and
- a solid light guide body (30) of transparent material, having
- at least one light entry face (31) for inputting at least some of the emitted light,
- at least one boundary face (34) for total reflection of at least some of the emitted light, and
- at least one light exit face for outputting at least some of the totally reflected light,
wherein the outwardly visible shape and the external dimensions of the lighting device (16), in the state mounted on the vehicle, are defined by the shape and dimensions of the light guide body (30), **characterized in that** the lighting device (16) has at least two light sources (26) and the light guide body (30) has two essentially opposite light exit faces, and light emitted by the light sources (26), after being input through light entry faces (31) and after a total reflection at boundary faces (34), leaves the lighting device (16) through the light exit faces in two essentially opposite main beam directions.

2. The lighting device (16) of claim 1, **characterized in that** the at least one light source (26) includes a semiconductor light source, in particular a light emitting diode.

3. The lighting device (16) of claim 1 or 2, **characterized in that** the at least one light source (26) emits colored light, in particular yellow, amber or orange light.

4. The lighting device (16) of one of claims 1-3, **characterized in that** the light guide body (30) is embodied as a cone, with a jacket face that has a convex curvature, as viewed in a sectional plane along a longitudinal axis (29) of the light guide body (30).

5. The lighting device (16) of one of claims 1-4, **characterized in that** the at least one totally reflecting boundary face (34) is embodied in a respective indentation (33) in a jacket face of the light guide body (30).

6. The lighting device (16) of one of claims 1-5, **characterized in that** partial faces of an outer face of the light guide body (30) each form both a totally reflecting boundary face (34) for a first beam of light and a light exit face for a second beam of light.

7. The lighting device (16) of claim 6, **characterized in that** the light guide body (30) has two essentially opposite partial faces of the outer face, and a first partial face forms a totally reflecting boundary face (34) for a first beam of light and a light exit face for a second beam of light, and a second partial face forms a totally reflecting boundary face (34) for the second beam of light and a light exit face for the first beam of light.

8. The lighting device (16) of one of claims 1-7, **characterized in that** the lighting device (16) is embodied as a blinking light of the vehicle.

9. The lighting device (16) of one of claims 1-8, **characterized in that** the lighting device (16) is embodied for being mounted on a distal end of a handlebar (11) of a vehicle embodied as a bicycle (1, 17).

10. The lighting device (16) of one of claims 1-9, **characterized in that** the lighting device (16), besides the at least one light source (26), has at least one further light source (27), the light from which partially enters the light guide body (30) and exits from it in distributed fashion over a majority of a jacket face of the light guide body (30).

11. The lighting device (16) of claim 10, **characterized in that** the light of the at least one further light source (27) exits from the light guide body (30) in a radially outwardly oriented manner with respect to a longitudinal axis (29) of the light guide body (30).

12. The lighting device (16) of claim 10 or 11, **characterized in that** the at least one further light source (27) is embodied for emitting white or red light.

13. The lighting device (16) of claim 12, **characterized in that** the white light emitted by the at least one further light source (27) serves to create a position light, boundary light or parking light or a daytime headlight, or the red light emitted by the at least one further light source (27) serves to create a tail light or a brake light.

14. The lighting device (16) of one of claims 1-13, **characterized in that** the lighting device (16) includes a base body (22) of metal, which has an electric trigger circuit for the at least one light source (26) and if applicable for the at least one further light source (27), and the at least one light source (26) and if applicable the at least one further light source (27) as well as the light guide body (30) are secured to the base body (22).

## Revendications

1. Dispositif d'éclairage (16) pour un véhicule, en particulier pour une bicyclette (1, 17), ledit dispositif d'éclairage (16) comprenant:
- au moins une source de lumière (26) destinée à émettre de la lumière et
- un corps guide de lumière (30) massif en matière transparente ayant
- au moins une surface d'entrée de lumière (31) pour injecter au moins une partie de la lumière émise,
- au moins une interface (34) de réflexion totale d'au moins une partie de la lumière injectée et
- au moins une surface de sortie de lumière pour extraire au moins une partie de la lumière totalement réfléchie,
la forme extérieurement visible et les dimensions extérieures du dispositif d'éclairage (16) en état monté sur le véhicule étant définies par la forme et les dimensions dudit corps guide de lumière (30), **caractérisé par le fait que** ledit dispositif d'éclairage (16) présente au moins deux sources de lumière (26) et ledit corps guide de lumière (30) présente deux surfaces de sortie de lumière situées pour l'essentiel en regard l'une de l'autre; après une injection par des surfaces d'entrée de lumière (31) et une réflexion totale sur des interfaces (34), de la lumière émise par les sources de lumière (26) sortant du dispositif d'éclairage (16) par les surfaces de sortie de lumière dans deux directions d'émission principales pour l'essentiel en regard l'une de l'autre.

2. Dispositif d'éclairage (16) selon la revendication 1, **caractérisé par le fait que** ladite au moins une source de lumière (26) comprend une source de lumière semiconductrice, en particulier une diode électroluminescente.

3. Dispositif d'éclairage (16) selon la revendication 1 ou 2, **caractérisé par le fait que** ladite au moins une source de lumière (26) émet de la lumière de couleur, en particulier jaune, ambrée ou orange.

4. Dispositif d'éclairage (16) selon l'une quelconque des revendications 1 à 3, **caractérisé par le fait que** ledit corps guide de lumière (30) est réalisé comme un cône ayant une surface latérale qui, vue dans un plan de coupe le long d'un axe longitudinal (29) du corps guide de lumière (30), est bombée de manière convexe.

5. Dispositif d'éclairage (16) selon l'une quelconque des revendications 1 à 4, **caractérisé par le fait que** ladite au moins une interface (34) totalement réfléchissante est réalisée respectivement dans un creux (33) d'une surface latérale du corps guide de lumière (30).

6. Dispositif d'éclairage (16) selon l'une quelconque des revendications 1 à 5, **caractérisé par le fait que** des surfaces partielles d'une surface extérieure du corps guide de lumière (30) forment chacune aussi bien une interface (34) totalement réfléchissante pour un premier faisceau lumineux qu'une surface de sortie de lumière pour un second faisceau lumineux.

7. Dispositif d'éclairage (16) selon la revendication 6, **caractérisé par le fait que** ledit corps guide de lumière (30) présente deux surfaces partielles de la surface extérieure situées pour l'essentiel en regard l'une de l'autre, une première surface partielle formant une interface (34) totalement réfléchissante pour un premier faisceau lumineux et une surface de sortie de lumière pour un second faisceau lumineux, et une deuxième surface partielle formant une interface (34) totalement réfléchissante pour le second faisceau lumineux et une surface de sortie de lumière pour le premier faisceau lumineux.

8. Dispositif d'éclairage (16) selon l'une quelconque des revendications 1 à 7, **caractérisé par le fait que** le dispositif d'éclairage (16) est réalisé comme un feu clignotant du véhicule.

9. Dispositif d'éclairage (16) selon l'une quelconque des revendications 1 à 8, **caractérisé par le fait que** le dispositif d'éclairage (16) est réalisé pour le montage sur une extrémité distale d'un guidon (11) d'un véhicule réalisé en tant que bicyclette (1, 17).

10. Dispositif d'éclairage (16) selon l'une quelconque des revendications 1 à 9, **caractérisé par le fait que** le dispositif d'éclairage (16) comprend, outre ladite au moins une source de lumière (26), au moins une autre source de lumière (27) dont la lumière entre au moins en partie dans ledit corps guide de lumière (30) et sort de celui-ci de manière répartie sur une grande partie d'une surface latérale du corps guide de lumière (30).

11. Dispositif d'éclairage (16) selon la revendication 10, **caractérisé par le fait que** la lumière de ladite au moins une autre source de lumière (27) sort du corps guide de lumière (30) de manière à être dirigée radialement vers l'extérieur par rapport à un axe longitudinal (29) du corps guide de lumière (30).

12. Dispositif d'éclairage (16) selon la revendication 10 ou 11, **caractérisé par le fait que** ladite au moins une autre source de lumière (27) est réalisée pour émettre de la lumière blanche ou rouge.

13. Dispositif d'éclairage (16) selon la revendication 12, **caractérisé par le fait que** la lumière blanche émise par ladite au moins une autre source de lumière (27) sert à générer un feu de position, de délimitation ou une lanterne ou un feu de circulation diurne ou que la lumière rouge émise par ladite au moins une autre source de lumière (27) sert à générer un feu arrière ou un feu stop.

14. Dispositif d'éclairage (16) selon l'une quelconque des revendications 1 à 13, **caractérisé par le fait que** le dispositif d'éclairage (16) comprend un corps de base (22) en métal qui présente un circuit de commande électrique pour ladite au moins une source de lumière (26) et, le cas échéant, pour ladite au moins une autre source de lumière (27), ladite au moins une source de lumière (26) et, le cas échéant, ladite au moins une autre source de lumière (27) ainsi que le corps guide de lumière (30) sont fixés sur ledit corps de base (22).
